Europäisches Patentamt

European Patent Office

Office européen des brevets

(19)

(11) **EP 0 936 584 A2**

(12) **EUROPEAN PATENT APPLICATION**

(43) Date of publication:
**18.08.1999 Bulletin 1999/33**

(51) Int Cl.$^6$: **G07F 7/10**

(21) Application number: **99301033.9**

(22) Date of filing: **12.02.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.02.1998 JP 3096298**

(71) Applicant: **MATSUSHITA ELECTRIC INDUSTRIAL CO., LTD.**
**Kadoma-shi, Osaka 571-8501 (JP)**

(72) Inventor: **Tatebayashi, Makoto**
**Takarazuka-shi, Hyogo-ken 665-0852 (JP)**

(74) Representative: **Crawford, Andrew Birkby et al**
**A.A. THORNTON & CO.**
**Northumberland House**
**303-306 High Holborn**
**London WC1V 7LE (GB)**

(54) **Card data authentication system**

(57)    To provide a card data authentication system whereby any of a plurality of data terminal devices reads and authenticates card data written on an IC card by any of the plurality of data terminal devices. A management center generates a signature key and a verification key that are unique to each of the plurality of data terminal devices according to a digital signature scheme with a public-key cryptosystem and sends generated signature keys respectively to the plurality of data terminal devices. A data writing terminal device generates digital signature data for plaintext data using a signature key sent from the management center and writes the digital signature data on the IC card. A data reading terminal device reads the digital signature data from the IC card and authenticates the card data using the read digital signature data and a verification key corresponding to the signature key used by the data writing terminal device.

Fig. 1

100 MEDIUM DATA
AUTHENTICATION
SYSTEM

MANAGEMENT CENTER — 10

DATA TERMINAL — 20a

DATA TERMINAL — 20b

DATA TERMINAL — 20c

. . . .

DATA TERMINAL — 20n

WRITE

READ

STORAGE MEDIUM — 30

## Description

This application is based on an application No. 10-030962 filed in Japan, the content of which is hereby incorporated by reference.

BACKGROUND OF THE INVENTION

Field of the Invention

The present invention relates to a technique for authenticating data written on an IC (Integrated Circuit) card.

Description of the Prior Art

In recent years, digital signature techniques have widely been used to authenticate data which is communicated via channels in data communication systems. Here, to authenticate data is to verify the authenticity of the data by checking whether the data has been sent from an authentic transmitter and whether the data has not been tampered with.

For data communicated through portable storage mediums, too, it is necessary to authenticate the data using authentication techniques.

An example of conventional systems for authenticating data written on storage mediums will be explained below.

<Configuration and Operation of Medium Data Authentication System>

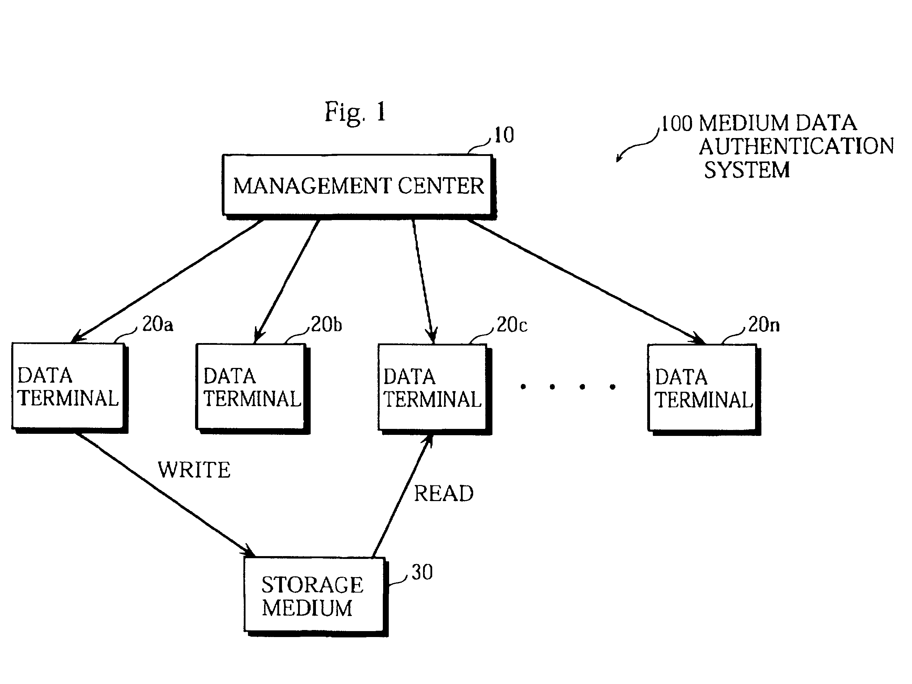

Fig. 1 shows the configuration of a commonly-used medium data authentication system 100.

In the figure, the medium data authentication system 100 includes a management center 10, approximately 100 data terminals 20a-20n, and a storage medium 30. Though not shown in the figure, a pluraliLy of storage mediums may be included in the system.

The management center 10 manages signature keys and verification keys used for data authentication. The management center 10 creates unique signature keys and unique verification keys for the data terminals 20a-20n based on a data authentication method using a predetermined secret-key cryptosystem, and sends a unique signature key and the verification keys of all data terminals 20a-20n in secrecy to each data terminal corresponding to the signature key.

Each of the data terminals 20a-20n is roughly made up of a CPU and a memory for storing the signature key and verification keys sent from the management center 10 in secrecy, and is capable of writing/reading data on/from the storage medium 30.

When writing data such as account information on the storage medium 30, one of the data terminals 20a-20n generates an authenticator as digital signature data from a combination of the data and a terminal ID of the data terminal using a received signature key according to a secret-key encryption algorithm, and writes the terminal ID, the data and the generated authenticator on the storage medium 30.

When reading data from the storage medium 30, one of the data terminals 20a-20n reads data, an authenticator and a terminal ID from the storage medium 30 and verifies the authenticity of the data using the read data, authenticator and terminal ID. The authentication method used here will be explained later.

The storage medium 30 is a portable storage medium such as a flexible disk. Once data has been written on the storage medium 30 by one data terminal, the storage medium 30 is carried by a person to another data terminal which reads the data from the storage medium 30.

<Data Authentication Method Using Secret-Key Encryption Algorithm>

One example of the secret-key encryption algorithm used for data authentication is the DEA (Data Encryption Algorithm) taught by ISO/IEC (International Organization for Standardization/International Electrotechnical Commission). For details on the DEA and the DES (Data Encryption Standard), see Chapter 6 in Tatsuaki Okamoto & H. Yamamoto (1997) *Modern Encryption,* published by Sangyo Tosho.

To generate an authenticator using the DEA, an input 64-bit plaintext P is encrypted by encryption E using an input 56-bit signature key S to generate a 64-bit ciphertext C, which is then added to the plaintext P as an authenticator C. This process can be expressed as "$C=E(S,P)$".

To authenticate the authenticator using the DEA, the 64-bit plaintext P is read and encrypted by encryption E using a 56-bit verification key V to generate a 64-bit ciphertext, which is then compared with the authenticator C. If they match, the plaintext P is judged to be authentic.

More specifically, after reading the data, authenticator and terminal ID from the storage medium 30, the data terminal extracts a verification key corresponding to the read terminal ID from the verification keys stored in the memory and encrypts a combination of the terminal ID and the data using the extracted verification key according to the secret-key encryption algorithm. A ciphertext generated as a result is then compared with the authenticator to verify the authenticity of the data.

For more detail on the above authentication method, see *Modern Encryption,* Chapter 10.

<Security>

The medium data authentication system described above has the following security characteristics against unauthorized acts.

(1) Protection against Unauthorized Alteration of Data on Storage Medium

In the above medium data authentication system, data is written on a storage medium together with an authenticator that has been generated using a signature key unique to a data terminal. This signature key is concealed in the data terminal and cannot be acquired by any unauthorized party. Accordingly, if data such as account information stored on a storage medium has been altered by an unauthorized party, a data terminal which reads the data finds out that the data has been altered by checking an authenticator read from the storage medium and appropriately aborts a process such as a transaction. By doing so, damage caused by unauthorized alteration of data can be avoided.

(2) Protection against Unauthorized Copying of Data on Storage Medium

In the above medium data authentication system, a storage medium may be designed such that a medium ID is stored in advance in a user-unrewritable area of the storage medium. A data terminal which writes data on such a storage medium generates an authenticator from a combination of data, a terminal ID and the medium ID so that the authenticator will be unique to the storage medium. By doing so, even when an unauthorized party has copied data such as account information written on a storage medium, a data terminal which reads data from an unauthorized copy of the storage medium finds out that the data is not authentic by checking an authenticator and medium ID read from the copy and appropriately aborts a process such as a transaction. Thus, damage caused by unauthorized copying of data can be avoided.

<Advantages and Disadvantages>

suppose each data terminal stores the same secret signature key instead of a secret signature key different from the other data terminals. If one data terminal is invaded and a signature key stored in the data terminal is stolen by an unauthorized party, all data terminals would be damaged, since the unauthorized party can forge a digital signature of any of the data terminals using the acquired signature key. When this happens, the signature key in each data terminal must be replaced with a new signature key, which would cost a great deal of money.

In the above medium data authentication system, however, each data terminal holds a secret signature key that is different from the other data terminals, so that the above problem will not occur. Also, each data terminal holds the verification keys corresponding to the signature keys of all data terminals, so that each data terminal can authenticate an authenticator generated by any of the data terminals using its signature key, by using a verification key corresponding to the signature key.

Nevertheless, the above conventional medium data authentication system using the secret-key encryption algorithm has the following disadvantages.

Since each data terminal possesses the verification keys corresponding to the signature keys of all data terminals, once an unauthorized party has broken into one data terminal, the verification keys of all data terminals will be known. The medium data authentication system is vulnerable to such an unauthorized act, since a verification key and a signature key corresponding to the verification key are the same in the secret-key encryption algorithm and thus the unauthorized party can forge a digital signature made by any of the data terminals once it has acquired the verification keys.

This problem might be solved by modifying the medium data authentication system so that the verification keys of all data terminals are not sent to each data terminal but are kept in the management center, wherein each time a data terminal requests a verification key, the management center sends the verification key to the data terminal via a communication line. In such a system, however, whenever a data terminal intends to authenticate data such as account information, a verification key has to be transmitted from the management center to the data terminal via a communication line.

<Supplemental Remarks>

Chiefly as a substitute for cash, attention is being given to an IC card that is a portable storage medium with a semiconductor memory capable of storing and renewing data. The IC card is equipped with an unrewritable memory that can be implemented with a semiconductor integrated circuit, and includes various functions, such as a function of limiting the storing and renewing of data to a terminal that exercises a predetermined method, a function of judging the authenticity of a terminal, and a function of protecting written data by means of encryption/digital signature. Here, IC cards can be roughly classified by whether a microprocessor implemented with a semiconductor integrated circuit is included or not. An IC card that includes a microprocessor is capable of authenticating a terminal to which the card is connected by means of encryption/digital signature, while such an IC card is relatively expensive due to its large circuit size. On the other hand, an IC card that does not include a microprocessor is less expensive, since it only contains a circuit for an unrewritable memory. From the above viewpoint, there is a great need to realize a data authentication system that solves the stated problems for an IC card of minimum circuit size.

SUMMARY OF THE INVENTION

The first object of the present invention is to provide a card data authentication system for enabling a plurality of data terminal devices to write, read, and authenticate data on an IC card, whereby a data terminal device does not have to communicate with a management center each time it authenticates data, and damage caused by an unauthorized party invading one of the plurality of data terminal devices (especially damage caused by the unauthorized party acquiring secret data used for authentication) can be minimized.

The second object of the present invention is to provide a data terminal device that can be used as a component of the card data authentication system.

The first object can be fulfilled by a card data authentication system whereby a data reading terminal device authenticates card data written on an IC card by any of a plurality of data writing terminal devices, the card data authentication system including: a management device for generating signature keys respectively for the plurality of data writing terminal devices and verification keys corresponding to the signature keys based on a digital signature scheme with a public-key cryptosystem, sending the signature keys respectively to the plurality of data writing terminal devices, and enabling the data reading terminal device to obtain a verification key for authenticating the card data; the plurality of data writing terminal devices, wherein any of the plurality of data writing terminal devices generates digital signature data for plaintext data using a signature key sent from the management device and writes the digital signature data on the IC card; and the data reading terminal device for reading the digital signature data written by the data writing terminal device from the IC card and authenticating the card data using the verification key corresponding to the signature key used by the data writing terminal device.

With the above construction, the digital signature scheme with the public-key cryptosystem is used in the card data authentication system, so that a signature key stored in a data writing terminal device for generating digital signature data of card data is different from a verification key used by a data reading terminal device for authenticating the card data. Accordingly, even if the data reading terminal device is invaded and the verification key is acquired by an unauthorized party, the unauthorized party cannot forge a signature made by the data writing terminal device, since it is difficult to derive a signature key from a verification key in the public-key cryptosystem. Also, when different signature keys are given to a plurality of data writing terminal devices and the data reading terminal device stores verification keys corresponding to those signature keys in order to authenticate card data written by any of the plurality of data writing terminal devices, it is impossible for an unauthorized party which has invaded the data reading terminal device to obtain a signature key of any of the plurality of data writing terminal devices and forge a signature. Thus, the security of the card data authentication system for IC cards is ensured.

Here, the management device may send the generated verification keys to the data reading terminal device, wherein the data writing terminal device writes the plaintext data on the IC card together with the digital signature data, and wherein the data reading terminal device reads the digital signature data and the plaintext data written by the data writing terminal device from the IC card, and verifies an authenticity of the read plaintext data using the read digital signature data, the read plaintext data, and the verification key, among the verification keys sent from the management device, that corresponds to the signature key used by the data writing terminal device.

With the above construction, the management device sends the verification keys corresponding to the signature keys for the plurality of data writing terminal devices to the data reading terminal device, so that the data reading terminal device can authenticate card data written by any of the plurality of data writing terminal devices, through use of one of the received verification keys. Also, the signature keys and the verification keys are generated based on the digital signature scheme with the public-key cryptosystem. Accordingly, even if an unauthorized party invades the data reading terminal device and acquires the verification keys, it is impossible for the unauthorized party to derive a signature key from any of the acquired verification keys and forge a signature.

Here, the data writing terminal device may include: a signature key storing unit being a memory for storing the signature key sent from the management device; a written data storing unit being a memory for storing the plaintext data; a digital signature data generating unit for generating the digital signature data for the plaintext data using the signature key stored in the signature key storing unit; and a writing unit for writing the plaintext data stored in the written data storing unit and the digital signature data generated by the digital signature data generating unit, on the IC card, wherein the data reading terminal device includes: a verification key storing unit being a memory for storing the verification keys sent from the management device; a reading unit for reading the plaintext data and the digital signature data from the IC card; and an authenticating unit for verifying the authenticity of the read plaintext data using the read digital signature data, the read plaintext data, and one of the verification keys stored in the verification key storing unit.

With the above construction, each data writing terminal device stores a signature key for generating digital signature data and the data reading terminal device stores the verification keys of all data terminals for authenticating card data written by any of the data writing terminal devices. Accordingly, each data terminal device does not have to acquire a necessary key from an external source every time the data terminal device reads/writes data from/on the IC card. As a result, the operation of the card data authentication system can be performed swiftly.

Here, the management device may generate the signature keys which are each different for the plurality of data writing terminal devices and the verification keys which are each different for the plurality of data writing terminal devices, and send the verification keys for the plurality of data writing terminal devices to the data reading terminal device in pairs with terminal IDs of the plurality of data writing terminal devices, wherein the plaintext data stored in the written data storing unit in the data writing terminal device includes a terminal ID of the data writing terminal device, wherein the verification key storing unit in the data reading terminal device stores the verification keys for the plurality of data writing terminal devices and the terminal IDs of the plurality of data writing terminal devices in pairs, and wherein the authenticating unit in the data reading terminal device refers to the terminal ID included in the plaintext data read by the reading unit, retrieves the verification key corresponding to the terminal ID from the verification key storing unit, and verifies the authenticity of the plaintext data using the retrieved verification key.

With the above construction, the verification keys stored in the data reading terminal device are associated with terminal IDs of the plurality of data writing terminal devices. Accordingly, the data reading terminal device can accurately authenticate card data written by any of the plurality of data writing terminal devices, by referring to a terminal ID written on the IC card and selects a verification key corresponding to the terminal ID. Also, even if an unauthorized party acquires the verification keys stored in the data reading terminal device, the unauthorized party cannot derive a signature key from any of the verification keys and forge a signature, since the digital signature scheme with the public-key cryptosystem is used in the card data authentication system. Thus, the security of the card data authentication system is ensured.

Here, the plaintext data may include account information, wherein the plurality of data writing terminal devices and the data reading terminal device are each installed in one of stores located in various places.

With the above construction, the card data authentication system can be applied to a part of a POS system, with it being possible to achieve high security when customers buy goods using IC cards at stores located in various places.

Here, the signature keys and the verification keys may be generated by the management device based on a recovery-type signature scheme as the digital signature scheme, wherein the management device sends the generated verification keys to the data reading terminal device, wherein the data writing terminal device generates the digital signature data for the plaintext data based on the recovery-type signature scheme, and wherein the data reading terminal device recovers the plaintext data from the read digital signature data based on the recovery-type signature scheme using one of the verification keys sent from the management device, and verifies an authenticity of the plaintext data by judging whether the recovered plaintext data meets a predetermined condition.

With the above construction, the data writing terminal device converts the plaintext data to the digital signature data by a secret signature algorithm and writes the digital signature data alone on the IC card instead of writing both the digital signature data and the plaintext data, and the data reading terminal device reads the digital signature data and recovers the plaintext data from the digital signature data. By concealing the plaintext data in such a way, the security of the card data authentication system can further be improved. Also, the total amount of data written on the IC card is reduced by using the recovery-type signature scheme, with it being possible to realize the highly secure card data authentication system for IC cards with limited storage capacities.

Here, the management device may generate the signature keys which are each different for the plurality of data writing terminal devices and the verification keys which are each different for the plurality of data writing terminal devices, wherein the management device stores a center signature key and a center verification key which have been generated based on the digital signature scheme with the public-key cryptosystem, generates certificates respectively as digital signatures for the verification keys for the plurality of data writing terminal devices using the center signature key, sends the certificates respectively to the plurality of data writing terminal devices, and sends the center verification key to the data reading terminal device, wherein the data writing terminal device writes a certificate sent from the management device on the IC card together with the digital signature data, and wherein the data reading terminal device reads the certificate and the digital signature data from the IC card, verifies an authenticity of the verification key, for which the read certificate has been generated, using the read certificate and the center verification key sent from the management device, and when the verification key is verified as authentic, verifies an authenticity of the plaintext data, for which the read digital signature data has been generated, using the read digital signature data and the verification key.

With the above construction, the data reading terminal device does not store the verification keys of the plurality of data writing terminal devices beforehand. Accordingly, when the need for changing the structure of the system arises, the system can be renewed without difficulty. Also, the data reading terminal device authenticates the verification key using the certificate and the center verification key, so that the validity of the verification key is further ensured.

Here, the center signature key and the center verification key may be generated based on a recovery-type signature scheme as the digital signature scheme, wherein the certificates are generated by the management device respectively for the verification keys based on the recovery-type signature scheme, wherein the data writing terminal device includes: a signature key storing unit being a memory for storing the signature key sent from the management device; a written data storing unit being a memory for storing the plaintext data; a certificate storing unit being a memory for storing the certificate which has been generated for the verification key generated for the data writing terminal device and sent from the management device; a digital signature data generating unit for generating the digital signature data for the plaintext data using the signature key stored in the signature key storing unit; and a writing unit for writing, on the IC card, the plaintext data stored in the written data storing unit, the digital signature data generated by the digital signature data generating unit, and the certificate stored in the certificate storing unit, and wherein the data reading terminal device includes: a center verification key storing unit being a memory for storing the center verification key sent from the management device; a reading unit for reading the plaintext data, the digital signature data and the certificate from the IC card; a verification key verifying unit for recovering the verification key from the read certificate based on the recovery-type signature scheme using the center verification key stored in the center verification key storing unit, and verifying the authenticity of the verification key by judging whether the recovered verification key meets a predetermined condition; and an authenticating unit for verifying, when the verification key is verified as authentic by the verification key verifying unit, the authenticity of the plaintext data using the read plaintext data, the read digital signature data and the verification key.

With the above construction, the data writing terminal device writes the certificate alone on the IC card instead of writing both the certificate and the verification key, and the data reading terminal device reads the certificate from the IC card and recovers the verification key from the certificate. Accordingly, the total amount of data written on the IC card is reduced, with it being able to realize the highly secure card data authentication system for IC cards with limited storage capacities.

The second object can be fulfilled by a data reading terminal device for reading plaintext data from an IC card on which a data writing terminal device has written the plaintext data and digital signature data that has been generated for the plaintext data using a signature key, and verifying an authenticity of the plaintext data, the data reading terminal device including: a verification key storing unit being a memory for storing a verification key corresponding to the signature key, the verification key having been generated by an external device based on a digital signature scheme with a public-key cryptosystem; a reading unit for reading the plaintext data and the digital signature data from the IC card; and an authenticating unit for verifying the authenticity of the plaintext data using the read plaintext data, the read digital signature data and the verification key.

With the above construction, the data reading terminal device possesses a verification key generated according to the digital signature scheme with the public-key cryptosystem and authenticates card data written on the IC card using the verification key. Even if an unauthorized party invades the data reading terminal device and acquires the verification key, it is impossible for the unauthorized party to obtain a signature key from the verification key and forge a signature, due to the difficulty in deriving a signature key from a verification key in the public-key cryptosystem.

The second object can also be fulfilled by a data writing terminal device for writing plaintext data and digital signature data on an IC card so that another data terminal device can verify an authenticity of the plaintext data, the data writing terminal device including: a signature key storing unit being a memory for storing a signature key that has been generated by an external device based on a digital signature scheme with a public-key cryptosystem; a written data storing unit being a memory for storing the plaintext data; a digital signature data generating unit for generating the digital signature data for the plaintext data using the signature key; and a writing unit for writing the plaintext data stored in the written data storing unit and the digital signature data generated by the digital signature data generating unit, on the IC card.

With the above construction, the data writing terminal device possesses a signature key generated according to the digital signature scheme with the public-key cryptosystem, generates digital signature data for plaintext data using the signature key, and writes both the digital signature data and the plaintext data on the IC card, so that the plaintext data can be authenticated by a data reading terminal device that has a verification key corresponding to the signature key. Even if an unauthorized party invades the data reading terminal device and acquires the verification key, it is impossible for the unauthorized party to obtain the signature key from the verification key and forge a signature made by the data writing terminal device, due to the difficulty in deriving a signature key from a verification key in the public-key cryptosystem.

BRIEF DESCRIPTION OF THE DRAWINGS

These and other objects, advantages and features of the invention will become apparent from the following description thereof taken in conjunction with the accompanying drawings that illustrate a specific embodiment of the invention. In the drawings:

Fig. 1 is a block diagram showing the configuration of a commonly-used medium data authentication system 100;
Fig. 2 is a block diagram showing the configuration of a card data authentication system 1000 of the first embodiment of the present invention;
Fig. 3 shows the authentication procedure performed by a verifying unit 1214;

Fig. 4 is a block diagram showing the configuration of a card daLa authentication system 2000 of the second embodiment of the present invention;

Fig. 5 shows the authentication procedures performed by a verification key verifying unit 2213 and a verifying unit 2214; and

Fig. 6 is a block diagram showing the configuration of a card data authentication system 3000 of the third embodiment of the present invention.

## DESCRIPTION OF THE PREFERRED EMBODIMENTS

The following is a description of the embodiments of the present invention with reference to the figures.

### First Embodiment

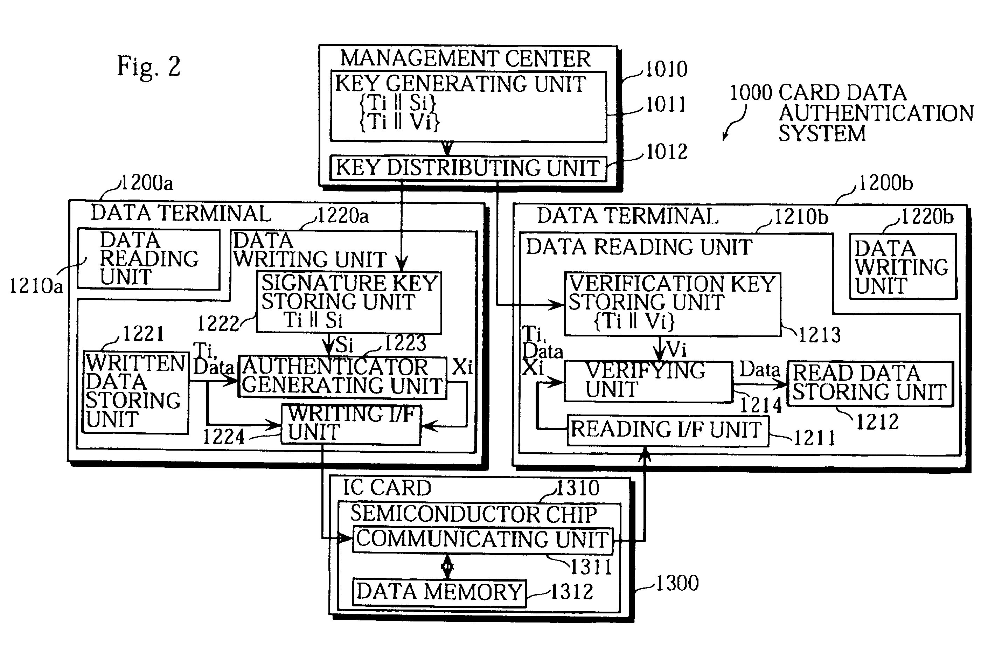

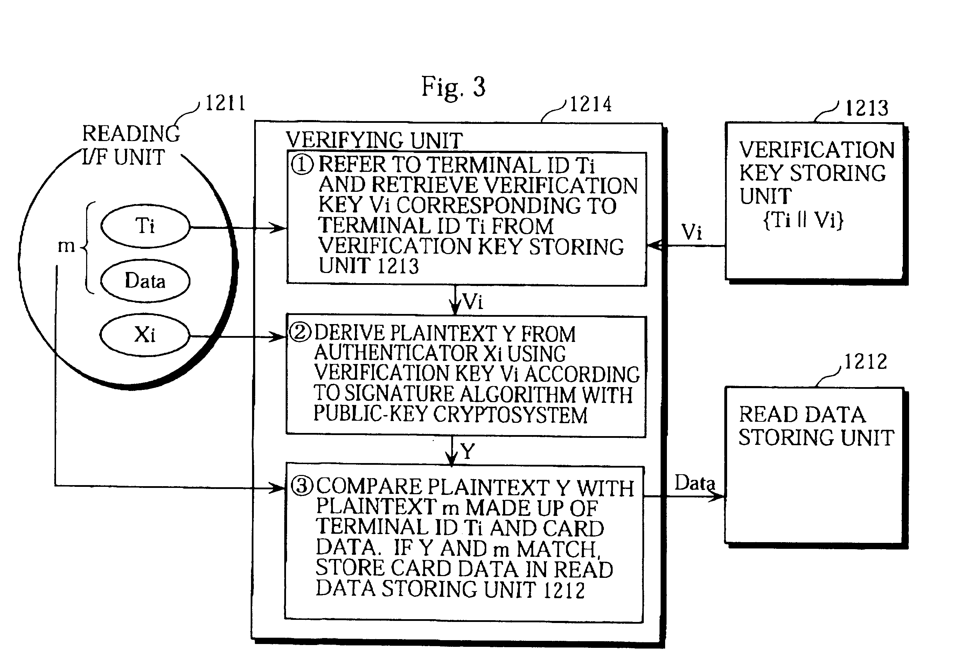

A card data authentication system of the first embodiment of the present invention will be described below with reference to Figs. 2 and 3.

<Configuration>

Fig. 2 is a block diagram showing the configuration of a card data authentication system 1000 of the first embodiment.

The card data authentication system 1000 is roughly composed of a management center 1010, approximately 100 data terminals including data terminals 1200a and 1200b, and an IC card 1300. In the figure, the data terminal 1200a writes data on the IC card 1300 and the data terminal 1200b reads the data from the IC card 1300. Though not illustrated, other data terminals are included anywhere in the system 1000. Also, the system 1000 may include more than one IC card.

This card data authentication system 1000 can, for example, be applied to a part of a POS (Point-Of-Sale) system whereby each data terminal is installed as a POS terminal in one of stores located in various places, with it being possible for customers to buy goods at each store using IC cards instead of cash. Here, an IC card is carried by a customer from one store to another, where data such as account information written on the IC card is referred to or renewed by an installed data terminal.

(Management Center 1010)

The management center 1010 is implemented by a computer or the like and manages signature keys and verification keys used for data authentication under its sophisticated security mechanism. A key generating unit 1011 and a key distributing unit 1012 are included in the management center 1010.

The key generating unit 1011 generates a signature key and a verification key that are unique to each data terminal based on a predetermined signature algorithm with a public-key cryptosystem. In the figure, "{Ti∥ ∥Si} {Ti∥Vi}" shows that a signature key Si and a verification key Vi are generated for each data terminal with terminal ID "Ti". The signature algorithm with the public-key cryptosystem used here will be explained later.

The key distributing unit 1012 sends a signature key Si and verification keys {vi} of all data terminals to each data terminal corresponding to the signature key Si via secret channels which are secure against unauthorized tapping or alteration of data. Here, each of the verification keys {Vi} is accompanied with a corresponding terminal ID Ti.

(Data Terminals 1200a, 1200b, ...)

The data terminal 1200a is made up of an IC card input/output device, a memory and a CPU, and functionally includes a data reading unit 1210a and a data writing unit 1220a. Similarly, the data terminal 1200b includes a data reading unit 1210b and a data writing unit 1220b. The data terminals 1200a and 1200b have the same configuration, except that they hold different signature keys.

The data writing unit 1220a includes a written data storing unit 1221, a signature key storing unit 1222, an authenticator generating unit 1223 and a writing I/F unit 1224.

The written data storing unit 1221 is a memory area for storing a terminal ID of the data terminal 1200a and data, such as account information, to be written on the IC card 1300. In this specification, the data such as account information to be written on the IC card is referred to as "card data". Also, a terminal ID of each data terminal differs with the other data terminals and a combination of the terminal ID and the card data will not exceed 1024 bits.

The signature key storing unit 1222 is a memory area for storing a signature key Si sent from the management center 1010, the signature key Si having been generated according to the signature algorithm with the public-key cryptosystem.

The authenticator generating unit 1223 generates an authenticator as digital signature data for a combination of the card data and the terminal ID stored in the written data storing unit 1221, using the signature key Si in the signature key storing unit 1222 according to the signature algorithm with the public-key cryptosystem.

The writing I/F unit 1224 writes the card data, the terminal ID and the generated authenticator on the IC card 1300.

The data reading unit 1210b includes a reading I/F unit 1211, a read data storing unit 1212, a verification key storing unit 1213 and a verifying unit 1214.

The reading I/F unit 1211 reads the card data, the terminal ID and the authenticator from the IC card 1300 and passes them to the verifying unit 1214.

The read data storing unit 1212 is a memory area for storing the card data once the card data has been verified as authentic.

The verification key storing unit 1213 is a memory area for storing the verification keys (Vi) sent from the management center 1010, the verification keys {Vi} having been generated according to the signature algorithm with the public-key cryptosystem.

The verifying unit 1214 verifies the authenticity of the card data read by the reading I/F unit 1211.

(IC Card 1300)

The IC card 1300 is a calling-card-sized portable plastic card in which a semiconductor chip 1310 made up of a communicating unit 1311 and a data memory 1312 is imbedded.

The data memory 1312 is a memory for storing data written by a data terminal, while the communicating unit 1311 is an active element for controlling access to the data memory 1312 and conducting data exchange with a data terminal. Through this communicating unit 1311, data is written on or read from the data memory 1312 of the IC card 1300 by the writing I/F unit 1224 or the reading I/F unit 1211.

<Authentication Method Using Signature Algorithm with Public-Key Cryptosystem>

The RSA (Rivest-Shamir-Adleman) signature algorithm is used as an example of the signature algorithm with the public-key cryptosystem. For details on the RSA signature scheme, see *Modern Encryption,* Chapter. 11.

(Generation of Keys)

Keys are generated according to the RSA signature algorithm as follows.

First, prime numbers p and q that meet $n = p \cdot q$ are generated and $L = LCM(p-1, q-1)$ is calculated. Here, n is 1024 bits long and LCM is a least common multiple. Next, ei which is mutually prime with L is detected, and di that meets $ei \cdot di = 1 (\bmod L)$ is calculated. Such obtained di and ei are respectively set as a signature key and a verification key. Note that di and ei are each 1024 bits long and correspond to the signature key Si and the verification key Vi described above.

(Generation of Authenticator)

The data writing unit 1220a of the data terminal 1200a generates an authenticator Xi as digital signature data of a plaintext m using the signature key di as follows. Here, the plaintext m is made up of the card data and the terminal ID Ti of the data terminal 1200a.

$$Xi = m^{di} (\bmod n)$$

(Writing of Data on IC Card)

The data writing unit 1220a then writes the plaintext m and the calculated authenticator Xi on the IC card.

(Authentication of Card Data)

The data reading unit 1210b of the data terminal 1200b reads the plaintext m and the authenticator Xi from the IC card and extracts, from the plaintext m, the terminal ID Ti of the data terminal 1200a which has written the plaintext m and the authenticator Xi on the IC card. The data reading unit 1210b then retrieves the verification key ei corresponding to the extracted terminal ID Ti from the verification key storing unit 1213 and performs the following calculation on the authenticator Xi according to mod n.

$$Y = Xi^{ei} = (m^{di})^{ei} = m^{(di \cdot ei)} = m$$

Such acquired Y is then compared with the plaintext m. If they match, the card data included in the plaintext m is verified as authentic, so that the data terminal 1200b can use the card data for subsequent processing.

<Operation>

The specific operation of the card data authentication system 1000 based on the authentication method using the above signature algorithm with the public-key cryptosystem will be explained below.

(Generation and Distribution of Keys by Management Center 1010)

The management center 1010 has the key generating unit 1011 generate a signature key Si and a verification key Vi that are unique to each data terminal according to the predetermined signature algorithm with the public-key cryptosystem. The management center 1010 then has the key distributing unit 1012 send a signature key Si and verification keys (Vi) of all data terminals in secrecy to each data terminal corresponding to the signature key Si all at once.

(Writing of Data on IC Card 1300 by Data Terminal 1200a)

When the need for writing card data on the IC card 1300 arises, the data terminal 1200a stores the card data in the written data storing unit 1211 along with a terminal ID of the data terminal 1200a and instructs the data writing unit 1220a to write the card data on the IC card 1300.

In the data writing unit 1220a, the authenticator generating unit 1223 generates an authenticator Xi as digital signature data for a combination of the card data and the terminal ID Ti stored in the written data storing unit 1221, using a signature key Si in the signature key storing unit 1222 according to the signature algorithm with the public-key cryptosystem. The writing I/F unit 1224 then writes the card data, the terminal ID Ti and the generated authenticator Xi on the IC card 1300.

Note here that the card data, the terminal ID and the authenticator are stored on the IC card 1300 in accordance with a data structure format set in advance so that each data terminal can recognize the storage content.

(Reading of Data from IC Card 1300 by Data Terminal 1200b)

When the need for reading card data from the IC card 1300 arises, the data terminal 1200b instructs the data reading unit 1210b to read the card data from the IC card 1300.

In the data reading unit 1210b, the reading I/F unit 1211 reads the terminal ID Ti, the card data and the authenticator Xi from the IC card 1300 and passes them to the verifying unit 1214. The verifying unit 1214 retrieves a verification key Vi corresponding to the received terminal ID Ti from the verification key storing unit 1213 and verifies the authenticity of the authenticator Xi using the retrieved verification key Vi according to the signature algorithm with the public-key cryptosystem, in order to authenticate the card data. If the card data is verified as authentic, the verifying unit 1214 stores the card data in the read data storing unit 1212.

Fig. 3 shows the authentication procedure performed by the verifying unit 1214.

(1) The verifying unit 1214 first refers to the terminal ID Ti read from the IC card 1300 and retrieves the verification key Vi corresponding to the terminal ID Ti from the verification key storing unit 1213.

(2) The verifying unit 1214 then calculates a plaintext Y from the read authenticator Xi using the verification key Vi according to the signature algorithm with the public-key cryptosystem as follows.

$$Y = Xi^{vi} \pmod{n}$$

(3) The verifying unit 1214 lastly compares the plaintext Y with the plaintext m made up of the card data and the terminal ID Ti. If they match, the verifying unit 1214 judges that the plaintext m is authentic, and stores the card data included in the plaintext m in the read data storing unit 1212.

As a result, the data terminal 1200b can use the card data stored in the read data storing unit 1212 for subsequent processing such as a transaction.

<Security>

In the card data authentication system 1000 of the first embodiment, digital signature data created by the signature scheme with the public-key cryptosystem is added to card data to be written on the IC card 1300, so that a data terminal which reads the card data from the IC card 1300 can find out whether the card data has been tampered with by means of authentication and abort subsequent processing as necessary. Thus, damage caused by unauthorized alteration of data can be prevented.

The card data authentication system 1000 may also be constructed such that a card ID is stored in advance in a user-unrewritable area of the IC card 1300 and the authenticator generating unit 1223 generates an authenticator for a combination of the card data, the terminal ID and the card ID. By doing so, even when an unauthorized party has made a copy of the IC card 1300, the verifying unit 1214 can find out such an unauthorized act by authenticating the card data as above and accordingly abort subsequent processing. Thus, damage caused by unauthorized copying of data can be prevented.

<Consideration>

In the card data authentication system 1000 of the first embodiment, each data terminal holds a secret signature key that differs with the other data terminals. Accordingly, even if an unauthorized party invades a data terminal and acquires a signature key of the data terminal, signature keys of the other data terminals will not be damaged. Also, the signature key of the invaded data terminal can easily be replaced with a new signature key.

Also, in the card data authentication system 1000 each data terminal holds the verification keys corresponding to the signature keys of all data terminals. Even when an unauthorized party breaks into a data terminal and acquires the verification keys, the unauthorized party cannot derive the signature keys from the acquired verification keys due to the difficulty in deriving a signature key from a verification key in the digital signature scheme with the public-key cryptosystem. Thus, it is impossible for the unauthorized party to obtain a signature key of another data terminal and forge a signature.

Second Embodiment

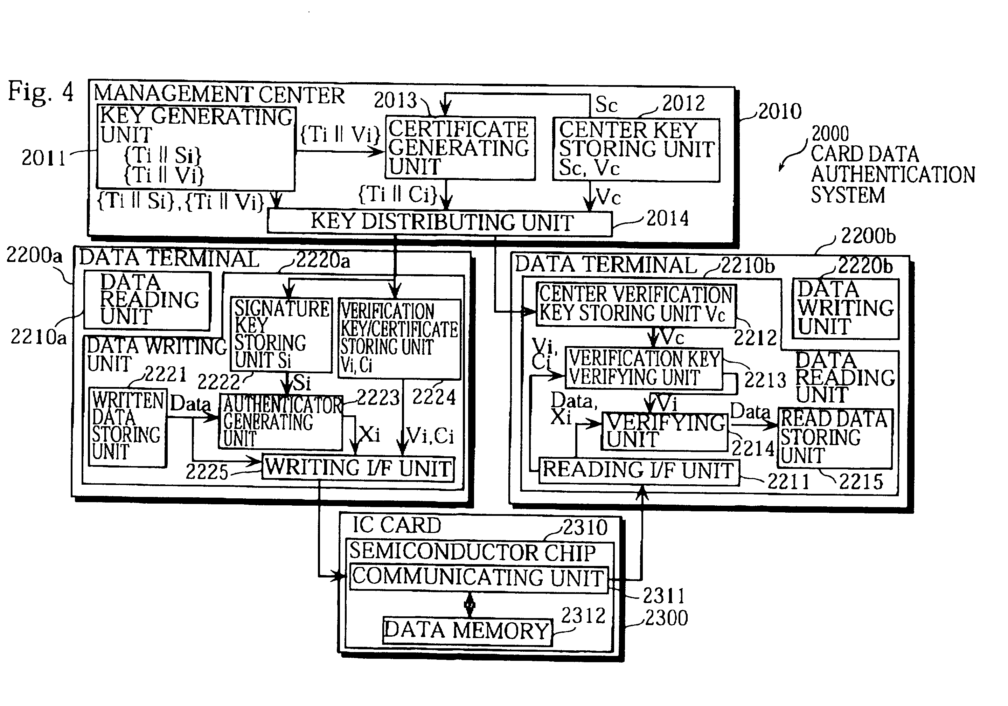

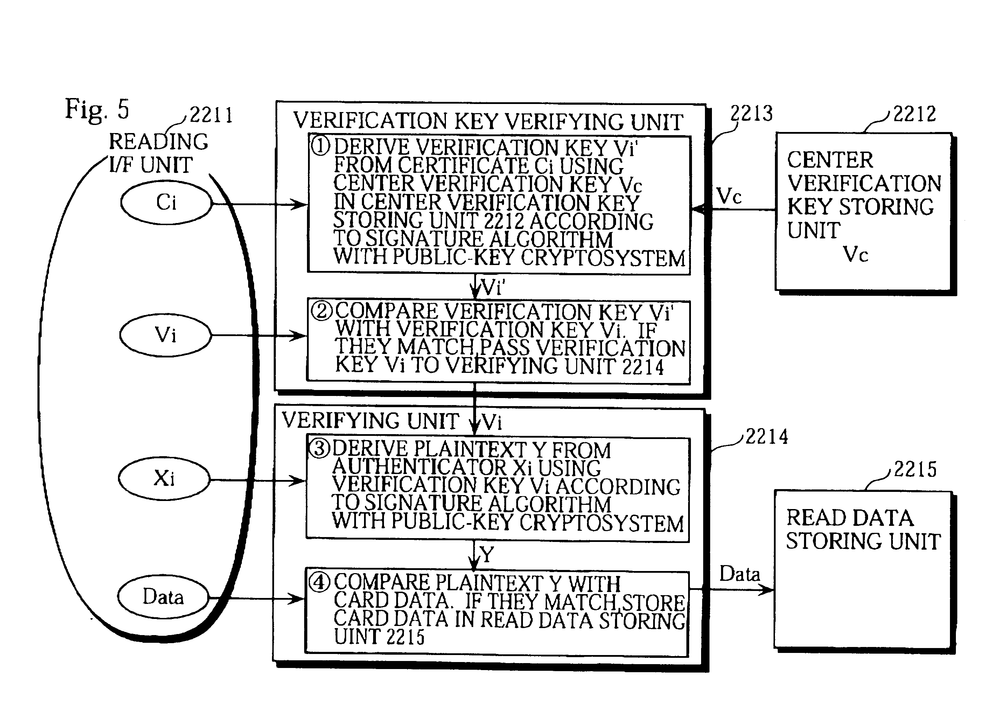

A card data authentication system of the second embodiment of the present invention will be described below with reference to Figs. 4 and 5.

<Configuration>

Fig. 4 is a block diagram showing the configuration of a card data authentication system 2000 of the second embodiment.

The card data authentication system 2000 is mainly composed of a management center 2010, approximately 100 data terminals including data terminals 2200a and 2200b, and an IC card 2300. In the figure, the data terminal 2200a writes data on the IC card 2300 and the data terminal 2200b reads the data from the IC card 2300. Though not illustrated, other data terminals are included anywhere in the system 2000, and more than one IC card may be present in the system 2000.

(Management Center 2010)

The management center 2010 is implemented by a computer or the like and manages signature keys and verification keys used for data authentication under its sophisticated security mechanism. A key generating unit 2011, a center key storing unit 2012, a certificate generating unit 2013 and a key distributing unit 2014 are included in the management center 2010.

The key generating unit 2011 has the same construction as the key generating unit 1011 of the first embodiment and generates a signature key and a verification key that are unique to each data terminal according to the predetermined signature algorithm with the public-key cryptosystem. In Fig. 4, "{Ti∥Si} {Ti∥Vi}" shows that a signature key Si and a verification key Vi are generated for each data terminal with terminal ID "Ti". The signature algorithm with the public-key cryptosystem used here is the same as the signature algorithm explained in the first embodiment.

The center key storing unit 2012 stores a center signature key Sc and a center verification key Vc corresponding to the center signature key Sc. Here, the center signature key Sc and the center verification key Vc have been generated based on the predetermined signature algorithm with the public-key cryptosystem, basically in the same way as the signature key di and the verification key ei described in the first embodiment. Also, the center signature key Sc and the center verification key vc are each 1024 bits long.

The certificate generating unit 2013 generates a certificate as a digital signature for each verification key Vi using the center signature key Sc according to the signature algorithm with the public-key cryptosystem. In Fig. 4, "{Ti∥Ci}" shows that a certificate Ci is generated for each data terminal with terminal ID "Ti".

The key distributing unit 2014 sends a signature key Si, a verification key Vi, a certificate Ci of the verification key Vi, and the center verification key Vc to each data terminal corresponding to the signature key Si via secret channels.

(Data Terminals 2200a, 2200b, ...)

The data terminal 2200a is made up of an IC card input/output device, a memory and a CPU, and functionally includes a data reading unit 2210a and a data writing unit 2220a. Similarly, the data terminal 2200b includes a data reading unit 2210b and a data writing unit 2220b. The data terminals 2200a and 2200b have the same configuration except that they hold different signature keys, verification keys and certificates.

The data writing unit 2220a includes a written data storing unit 2221, a signature key storing unit 2222, an authenticator generating unit 2223, a verification key/certificate storing unit 2224 and a writing I/F unit 2225.

The written data storing unit 2221 is a memory area for storing card data to be written on the IC card 2300. Here, the card data is set at 1024 bits or less.

The signature key storing unit 2222 is a memory area for storing a signature key Si that has been generated according to the signature algorithm with the public-key cryptosystem and sent from the management center 2010.

The verification key/certificate storing unit 2224 is a memory area for storing a verification key Vi and a certificate Ci sent from the management center 2010.

The authenticator generating unit 2223 generates an authenticator Xi as digital signature data of the card data stored in the written data storing unit 2221, using the signature key Si in the signature key storing unit 2222 according to the signature algorithm with the public-key cryptosystem.

The writing I/F unit 2225 writes the card data stored in the written data storing unit 2221, the generated authenticator Xi, and the verification key Vi and certificate Ci stored in the verification key/certificate storing unit 2224, on the IC card 2300.

The data reading unit 2210b includes a reading I/F unit 2211, a center verification key storing unit 2212, a verification key verifying unit 2213, a verifying unit 2214 and a read data storing unit 2215.

The reading I/F unit 2211 reads the card data, the authenticator Xi, the verification key Vi and the certificate Ci from the IC card 2300 and passes them to the verification key verifying unit 2213 and the verifying unit 2214.

The center verification key storing unit 2212 is a memory area for storing the center verification key Vc sent from the management center 2010.

The verification key verifying unit 2213 receives the verification key Vi and the certificate Ci from the reading I/F unit 2211 and derives a verification key from the certificate Ci by the signature algorithm with the public-key cryptosystem, using the center verification key Vc stored in the center verification key storing unit 2212. The verification key verifying unit 2213 then compares the derived verification key with the verification key Vi. If they match, the verification key verifying unit 2213 verifies the verification key Vi as authentic and passes it to the verifying unit 2214.

The verifying unit 2214 receives the card data and the authenticator Xi from the reading I/F unit 2211 and verifies the authenticity of the card data using the verification key Vi received from the verification key verifying unit 2213.

The read data storing unit 2215 is a memory area for storing the card data once the card data has been verified as authentic by the verifying unit 2214.

(IC Card 2300)

The IC card 2300 is a calling-card-sized portable plastic card in which a semiconductor chip 2310 made up of a communicating unit 2311 and a data memory 2312 is imbedded. The IC card 2300 differs with the IC card 1300 of the first embodiment only in the storage content of the data memory 2312, so that its explanation is omitted here.

<Operation>

The above card data authentication system 2000 operates as follows.

(Generation and Distribution of Keys by Management Center 2010)

The management center 2010 has the key generating unit 2011 generate a signature key Si and a verification key Vi that are unique to each data terminal according to the predetermined signature algorithm with the public-key cryptosystem. The management center 2010 then has the certificate generating unit 2013 generate a certificate Ci from a verification key Vi of each data terminal using the center signature key Sc according to the signature algorithm with the public-key cryptosystem.

The management center 2010 then has the key distributing unit 2014 send a signature key Si, a verification key Vi, a certificate Ci of the verification key Vi, and the center verification key vc in secrecy to each data terminal corresponding to the signature key Si all at once.

(Writing of Data on IC Card 2300 by Data Terminal 2200a)

When the need for writing card data on the IC card 2300 arises, the data terminal 2200a stores the card data in the written data storing unit 2221 and instructs the data writing unit 2220a to write the card data on the IC card 2300.

In the data writing unit 2220a, the authenticator generating unit 2223 generates an authenticator Xi for the card data stored in the written data storing unit 2221, using a signature key Si stored in the signature key storing unit 2222 according to the signature algorithm with the public-key cryptosystem.

Then, the writing I/F unit 2225 writes the generated authenticator Xi, the card data, and a verification key Vi and certificate Ci stored in the verification key/certificate storing unit 2224, on the IC card 2300.

(Reading of Data from IC Card 2300 by Data Terminal 2200b)

When the need for reading card data from the IC card 2300 arises, the data terminal 2200b instructs the data reading unit 2210b to read the card data from the IC card 2300.

In the data reading unit 2210b, the reading I/F unit 2211 reads the verification key Vi and the certificate Ci from the IC card 2300 and passes them to the verification key verifying unit 2213. The reading I/F unit 2211 also reads the card data and the authenticator Xi from the IC card 2300 and passes them to the verifying unit 2214.

The subsequent procedure performed by the data reading unit 2210b will be explained below with reference to Fig. 5.

Fig. 5 shows the procedures performed by the verification key verifying unit 2213 and the verifying unit 2214.

(1) The verification key verifying unit 2213 derives a verification key Vi' from the certificate Ci according to the signature algorithm with the public-key cryptosystem, using the center verification key Vc stored in the center verification key storing unit 2212 as follows.

$$Vi'=Ci^{Vc}(mod\ n)$$

(2) The verification key verifying unit 2213 then compares the verification key Vi' with the verification key vi. If they match, the verification key verifying unit 2213 verifies the verification key Vi as authentic and passes the verification key Vi to the verifying unit 2214. If, on the other hand, they do not match, the procedure is discontinued.

(3) The verifying unit 2214 calculates a plaintext Y from the authenticator Xi using the received verification key Vi according to the signature algorithm with the public-key cryptosystem as follows.

$$Y=Xi^{vi}(mod\ n)$$

(4) The verifying unit 2214 then compares the plaintext Y with the card data received from the reading I/F unit 2211. If they match, the verifying unit 2214 verifies the card data as authentic and stores the card data in the read data storing unit 2215.

As a result, the data terminal 2200b can use the card data in the read data storing unit 2215 for subsequent processing.

<Consideration>

In the card data authentication system 1000 of the first embodiment, each data terminal has held a database in which verification keys of all data terminals have been associated with terminal IDs. The validity of verification keys in such a system has been based on the premise that the database would not be analyzed and tampered with by an unauthorized party.

In comparison, such a database is not stored in each data terminal in the card data authentication system 2000 of the second embodiment, so that the validity of verification keys can be ensured regardless of the above premise. Accordingly, even if an unauthorized party invades a data terminal, verification keys of the other data terminals will not be damaged.

Also, since each data terminal does not store the verification keys of all data terminals in the card data authentication system 2000, the system can easily be updated when it is necessary to add a new data terminal or disable an existing data terminal.

Third Embodiment

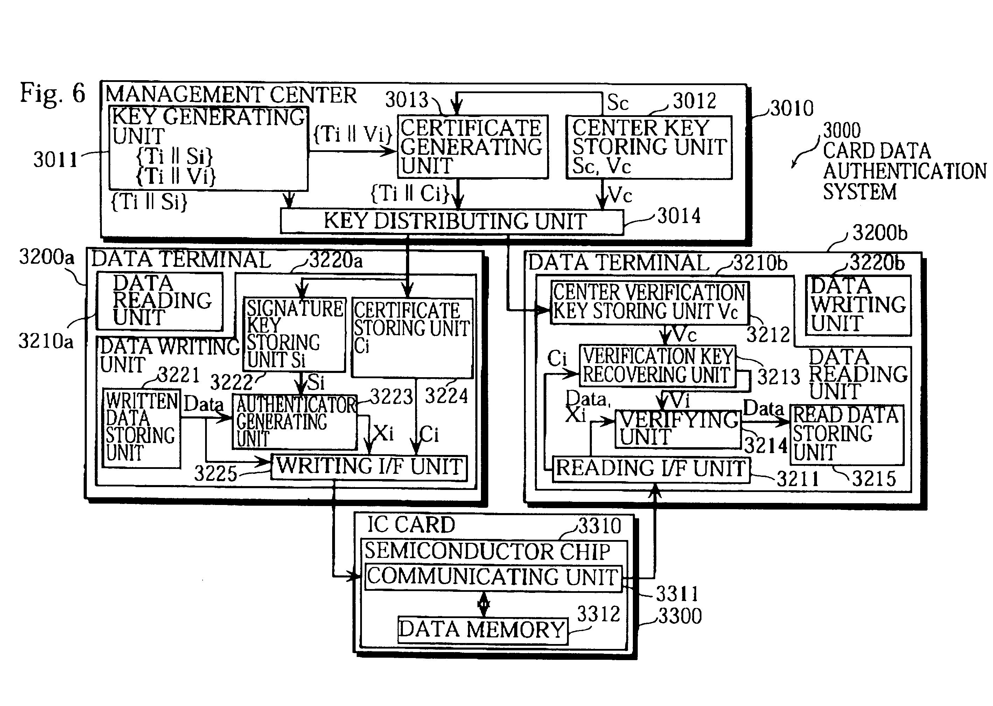

A card data authentication system of the third embodiment of the present invention will be described below with reference to Fig. 6.

<Configuration>

Fig. 6 is a block diagram showing the configuration of a card data authentication system 3000 of the third embodiment.

This card data authentication system 3000 is a modification of the card data authentication system 2000 of the second embodiment and is roughly composed of a management center 3010, approximately 100 data terminals including data terminals 3200a and 3200b, and an IC card 3300. In the figure, the data terminal 3200a writes data on the IC card 3300 and the data terminal 3200b reads the data from the IC card 3300. Though not illustrated, other data terminals are included anywhere in the system 3000, and more than one IC card may be present in the system 3000.

In the card data authentication system 2000 of the second embodiment, the management center 2010 has sent a verification key Vi and a certificate Ci of the verification key vi to each data terminal, the verification key Vi and the certificate Ci then being written on the IC card 2300 together with card data and an authenticator Xi.

In the card data authentication system 3000 of the third embodiment, on the other hand, the management center 3010 generates a certificate Ci for a verification key Vi of each data terminal using a recovery-type signature algorithm instead of an appendix-type signature algorithm and sends the certificate Ci alone to each data terminal instead of sending both the certificate Ci and the verification key Vi, so that the verification key Vi will not be written on the IC card 3300.

(Management Center 3010)

The management center 3010 is implemented by a computer or the like and manages signature keys and verification keys used for data authentication under its sophisticated security mechanism. A key generating unit 3011, a.center key storing unit 3012, a certificate generating unit 3013 and a key distributing unit 3014 are included in the management center 3010.

The key generating unit 3011, the center key storing unit 3012 and the certificate generating uniL 3013 are the same as the key generating unit 2011, center key storing unit 2012 and certificate generating unit 2013 of the second embodiment, except that the certificate generating unit 3013 uses the recovery-type signature algorithm to generate a certificate Ci for each verification key Vi. Also, in the third embodiment the key generating unit 3011 generates verification keys Vi that each conform to a predetermined rule. Here, such verification keys Vi are generated, for example, by adding a plurality of bit strings of specific pattern to each verification key vi. The recovery-type signature algorithm will be explained in detail later.

The key distributing unit 3014 sends a signature key Si, a certificate Ci and the center verification key Vc to each data terminal corresponding to the signature key Si via secret channels.

(Data Terminals 3200a, 3200b, ...)

The data terminal 3200a is made up of an IC card input/output device, a memory and a CPU, and functionally includes a data reading unit 3210a and a data writing unit 3220a. Similarly, the data terminal 3200b includes a data reading unit 3210b and a data writing unit 3220b. The data terminals 3200a and 3200b have the same configuration except that they store different signature keys and certificates.

The data writing unit 3220a is similar to the data writing unit 2220a of the second embodiment and includes a written data storing unit 3221, a signature key storing unit 3222, an authenticator generating unit 3223, a certificate storing unit 3224 and a writing I/F unit 3225. The differences with the data writing unit 2220a lie in that the verification key/certificate storing unit 2224 has been replaced with the certificate storing unit 3224 for storing a certificate Ci, and that the writing I/F unit 3225 writes card data stored in the written data storing unit 3221, an authenticator generated by the authenticator generating unit 3223, and the certificate Ci stored in the certificate storing unit 3224, on the IC card 3300, instead of writing the card data, the authenticator, the certificate Ci and a verification key Vi.

The data reading unit 3210b is similar to the data reading unit 2210b of the second embodiment and includes a reading I/F unit 3211, a center verification key storing unit 3212, a verification key recovering unit 3213, a verifying unit 3214 and a read data storing unit 3215. The difference with the data reading unit 2210b lies in that the verification key recovering unit 3213 receives a certificate Ci from the reading I/F unit 3211, recovers a verification key Vi from the certificate Ci according to the recovery-type signature algorithm using the center verification key Vc stored in the center verification key storing unit 3212, and judges whether the recovered verification key Vi conforms to the predetermined rule. If the verification key Vi conforms to the predetermined rule, the verification key recovering unit 3213 verifies the verification key Vi as authentic and passes it to the verifying unit 3214.

(IC Card 3300)

The IC card 3300 is a calling-card-sized portable plastic card in which a semiconductor chip 3310 made up of a communicating unit 3311 and a data memory 3312 is imbedded. The IC card 3300 differs with the IC card 2300 of the second embodiment only in the storage content of the data memory 3312.

<Recovery-type Signature Algorithm>

The recovery-type RSA signature algorithm is used as an example of the recovery-type signature algorithm. For the RSA signature scheme, see *Modern Encryption,* Chapter. 11.

(Generation of Certificates)

The center signature key Sc and the center verification key Vc are generated in the same way as the signature key di and the verification key ei of the first embodiment based on the RSA signature algorithm, and stored in the center key storing unit 3012 beforehand.

A certificate Ci is generated for each verification key Vi using the center signature key Sc based on the recovery-type RSA signature algorithm as follows. Here, the first 60 bits of the 1024-bit verification key Vi are each "0".

$$Ci=Vi^{Sc}$$

Certificates Ci generated for verification keys of the data terminals are then sent from the management center 3010 to the respective data terminals, and the data writing unit 3220a of the data terminal 3200a writes a received certificate Ci on the IC card 3300 together with an authenticator Xi and card data.

(Recovery of Verification Key)

To recover a verification key Vi from the certificate Ci and verify the authenticity of the verification key Vi, the data reading unit 3210b of the data terminal 3200b reads the certificate Ci from the IC card 3300 and has the verification key recovering unit 3213 perform the following calculation.

$$Vi=Ci^{Vc}$$

The verification key recovering unit 3213 then checks whether the first 60 bits of the calculated verification key Vi are "0". If so, the verification key recovering unit 3213 judges that the verification key Vi is authentic.

<Operation>

The operation of the above card data authentication system 3000 will be explained below.

(Generation and Distribution of Keys by Management Center 3010)

First, the management center 3010 has the key generating unit 3011 generate a signature key Si and a verification key Vi that are unique to each data terminal based on the predetermined signature algorithm with the public-key cryptosystem, and has the certificate generating unit 3013 generate a certificate Ci for each verification key Vi using the center signature key Sc according to the recovery-type signature algorithm.

The management center 3010 then has the key distributing unit 3014 send a signature key Si, a certificate Ci and the center verification key Vc to each data terminal corresponding to the signature key Si in secrecy all at once.

(Writing of Data on IC Card 3300 by Data Terminal 3200a)

When the need for writing card data on the IC card 3300 arises, the data terminal 3200a stores the card data in the written data storing unit 3221 and instructs the data writing unit 3220a to write the card data on the IC card 3300.

In the data writing unit 3220a, the authenticator generating unit 3223 generates an authenticator Xi for the card data stored in the written data storing unit 3221 according to the signature algorithm with the public-key cryptosystem, using a signature key Si received from the management center 3010 and stored in the signature key storing unit 3222.

Then, the writing I/F unit 3225 writes the generated authenticator Xi, the card data, and the certificate Ci stored in the certificate storing unit 3224 on the IC card 3300.

(Reading of Data from IC Card 3300 by Data Terminal 3200b)

When the need for reading card data from the IC card 3300 arises, the data terminal 3200b instructs the data reading unit 3210b to read the card data from the IC card 3300.

In the data reading unit 3210b, the reading I/F unit 3211 reads the certificate Ci from the IC card 3300 and passes it to the verification key recovering unit 3213. The reading I/F unit 3211 also reads the card data and the authenticator Xi from the IC card 3300 and passes them to the verifying unit 3214.

The verification key recovering unit 3213 recovers a verification key Vi from the certificate Ci according to the recovery-type signature algorithm, through use of the center verification key Vc stored in the center verification key storing unit 3212 as follows.

$$Vi=Ci^{Vc}(\bmod\ n)$$

The verification key recovering unit 3213 then judges whether the first 60 bits of the verification key Vi are "0". If the first 60 bits of the verification key Vi are "0", the verification key recovering unit 3213 verifies the verification key vi as authentic and passes it to the verifying unit 3214. If, on the other hand, the first 60 bits of the verification key Vi are not "0", the verification key recovering unit 3213 aborts the procedure.

The verifying unit 3214 calculates a plaintext Y from the authenticator Xi using the received verification key Vi according to the signature algorithm with the public-key cryptosystem as follows.

$$Y=Xi^{Vi}(\bmod\ n)$$

The verifying unit 3214 then compares the plaintext Y with the card data received from the reading I/F unit 3211. If they match, the verifying unit 3214 verifies the card data as authentic and stores the card data in the read data storing unit 3215.

As a result, the data terminal 3200b can use the card data in the read data storing unit 3215 for subsequent processing.

<Consideration>

In the card data authentication system 3000 of the third embodiment, a verification key corresponding to a signature key of a data terminal which writes card data is encrypted by the secret signature algorithm and written on the IC card 3300. By concealing the verification key in such a way, the security of the system can further be improved. Also, by using the recovery-type signature algorithm instead of an appendix-type signature algorithm, the total amount of data written on the IC card is reduced, with it being possible to realize the highly secure signature scheme for IC cards with limited storage capacities.

Supplemental Remarks

While the card data authentication system of the present invention has been described based on the above embodiments, the present invention is not limited to such. For instance, the following modifications are possible.

(1) In the first to third embodiments, a data terminal which writes data on an IC card has used the appendix-type signature algorithm whereby an authenticator is added to a plaintext as digital signature data of the plaintext. Alternatively, a recovery-type signature algorithm may be used whereby a plaintext is converted to digital signature data and written on the IC card so that a data terminal which reads data recovers the plaintext from the digital signature data. This recovery-type signature algorithm is the same as the recovery-type signature algorithm used for the verification keys in the third embodiment. When using the recovery-type signature algorithm, a plaintext made up of card data and, in some cases, a terminal ID is set so as to conform to a predetermined rule, so that the data terminal which reads data recovers a plaintext from an authenticator and verifies whether the recovered plaintext conforms to the predetermined rule. For instance, suppose a card ID is originally stored in a user-unrewritable area of the IC card. The data terminal which writes data includes the card ID in a plaintext, converts the plaintext to an authenticator, and writes the authenticator on the IC card. The data terminal which reads data recovers the plaintext from the authenticator and checks whether the plaintext includes the same card ID as the card ID stored in the unrewritable area of the IC card. This method can be applied to the first embodiment by modifying the card data authentication system 1000 such that the data writing unit 1220a generates an authenticator from a plaintext made up of card data, a terminal ID and a card ID and writes the authenticator and the terminal ID on the IC card 1300.

By using the recovery-type signature algorithm in such a way, only a ciphertext generated from an original plaintext using a secret signature algorithm is written on the IC card instead of both the ciphertext and the original plaintext, so that data that requires privacy, such as information on accounts, can be protected against unauthorized attack and the security of the system can be improved. In addition, the total amount of data written on the IC card is reduced by using the recovery-type signature algorithm, with it being possible to realize the highly secure signature scheme for IC cards with limited storage capacities.

(2) While the RSA signature scheme and the recovery-type RSA signature scheme have been used in the above embodiments, other signature schemes, such as a signature scheme with an elliptic curve cryptosystem based on a discrete logarithm problem on an elliptic curve, may instead be used. The signature scheme with the elliptic curve cryptosystem is especially effective for storage mediums with limited storage capacities, such as IC cards, since it can achieve the same level of security as the RSA signature scheme with the smaller amount of data.

(3) While the bit lengths of signature keys and verification keys have been specified in the above embodiments, lengths of keys used in the present invention are not limited to such.

(4) While the above embodiments have been based on the cases where one data terminal writes card data on an IC card and another data terminal reads the card data from the IC card, one data terminal may read card data from an IC card, authenticate the card data, and then write new card data on the IC card. Also, while each data terminal has included both a data reading unit for reading data and a data writing unit for writing data in the above embodiments, each data terminal may instead include either the data reading unit or the data writing unit.

(5) While the management center has sent signature keys, verification keys, a center verification key, or certificates to each data terminal in secrecy via telecommunication lines in the above embodiments, the above keys and certificates may be transmitted to each data terminal by other means.

(6) While the verification keys of all data terminals have been stored in the verification key storing unit 1213 of each data terminal in the first embodiment, each data terminal may not necessarily store the verification keys of all data terminals. If verification keys of specified data terminals are stored in a data terminal, this data terminal can read and authenticate card data written by any of the specified data terminals.

(7) While it has been stated in the description of the first embodiment that the card data authentication system 1000 can be used as a part of the POS system, the present invention may be applied to other uses.

(8) It is also possible to distribute, via communication lines, storage mediums that store computer programs for enabling general-purpose computers or program-executable household appliances to implement the procedures of the present invention, such as the procedures of generating signature keys, verification keys, center signature and verification keys, certificates and authenticators and the authenLication procedures performed by the management center and the data terminals. IC cards, optical discs, flexible discs and ROMs can be used as such storage mediums. By installing such distributed computer programs in personal computers or program-executable household appliances and executing the programs, the various features of the card data authentication system of the present invention can be realized.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A card data authentication system whereby a data reading terminal device authenticates card data written on an IC card by any of a plurality of data writing terminal devices, the card data authentication system comprising:

    a management device for generating signature keys respectively for the plurality of data writing terminal devices and verification keys corresponding to the signature keys based on a digital signature scheme with a public-key cryptosystem, sending the signature keys respectively to the plurality of data writing terminal devices, and enabling the data reading terminal device to obtain a verification key for authenticating the card data;
    the plurality of data writing terminal devices, wherein any of the plurality of data writing terminal devices generates digital signature data for plaintext data using a signature key sent from the management device and writes the digital signature data on the IC card; and
    the data reading terminal device for reading the digital signature data written by the data writing terminal device from the IC card and authenticating the card data using the verification key corresponding to the signature key used by the data writing terminal device.

2. The card data authentication system of Claim 1,

    wherein the management device sends the generated verification keys to the data reading terminal device,
    wherein the data writing terminal device writes the plaintext data on the IC card together with the digital signature data, and
    wherein the data reading terminal device reads the digital signature data and the plaintext data written by the data writing terminal device from the IC card, and verifies an authenticity of the read plaintext data using the read digital signature data, the read plaintext data, and the verification key, among the verification keys sent from the management device, that corresponds to the signature key used by the data writing terminal device.

3. The card data authentication system of Claim 2,

wherein the data writing terminal device includes:

signature key storing means being a memory for storing the signature key sent from the management device;

written data storing means being a memory for storing the plaintext data;

digital signature data generating means for generating the digital signature data for the plaintext data using the signature key stored in the signature key storing means; and

writing means for writing the plaintext data stored in the written data storing means and the digital signature data generated by the digital signature data generating means, on the IC card, and

wherein the data reading terminal device includes:

verification key storing means being a memory for storing the verification keys sent from the management device;

reading means for reading the plaintext data and the digital signature data from the IC card; and

authenticating means for verifying the authenticity of the read plaintext data using the read digital signature data, the read plaintext data, and one of the verification keys stored in the verification key storing means.

4. The card data authentication system of Claim 3,

wherein the management device generates the signature keys which are each different for the plurality of data writing terminal devices and the verification keys which are each different for the plurality of data writing terminal devices, and sends the verification keys for the plurality of data writing terminal devices to the data reading terminal device in pairs with terminal IDs of the plurality of data writing terminal devices,

wherein the plaintext data stored in the written data storing means in the data writing terminal device includes a terminal ID of the data writing terminal device,

wherein the verification key storing means in the data reading terminal device stores the verification keys for the plurality of data writing terminal devices and the terminal IDs of the plurality of data writing terminal devices in pairs, and

wherein the authenticating means in the data reading terminal device refers to the terminal ID included in the plaintext data read by the reading means, retrieves the verification key corresponding to the terminal ID from the verification key storing means, and verifies the authenticity of the plaintext data using the retrieved verification key.

5. The card data authentication system of Claim 4,

wherein the plaintext data includes account information, and

wherein the plurality of data writing terminal devices and the data reading terminal device are each installed in one of stores located in various places.

6. The card data authentication system of Claim 1,

wherein the signature keys and the verification keys are generated by the management device based on a recovery-type signature scheme as the digital signature scheme,

wherein the management device sends the generated verification keys to the data reading terminal device,

wherein the data writing terminal device generates the digital signature data for the plaintext data based on the recovery-type signature scheme, and

wherein the data reading terminal device recovers the plaintext data from the read digital signature data based on the recovery-type signature scheme using one of the verification keys sent from the management device, and verifies an authenticity of the plaintext data by judging whether the recovered plaintext data meets a predetermined condition.

7. The card data authentication system of Claim 6,

wherein the data writing terminal device includes:

signature key storing means being a memory for storing the signature key sent from the management device;

written data storing means being a memory for storing the plaintext data;

digital signature data generating means for generating the digital signature data for the plaintext data based on the recovery-type signature scheme using the signature key stored in the signature key storing means; and

writing means for writing the digital signature data generated by the digital signature data generating means on the IC card, and

wherein the data reading terminal device includes:

verification key storing means being a memory for storing the verification keys sent from the management device;

reading means for reading the digital signature data from the IC card; and

authenticating means for recovering the plaintext data from the read digital signature data based on the recovery-type signature scheme using one of the verification keys stored in the verification key storing means, and verifying the authenticity of the recovered plaintext data.

8.  The card data authentication system of Claim 7,

wherein the management device generates the signature keys which are each different for the plurality of data writing terminal devices and the verification keys which are each different for the plurality of data writing terminal devices, and sends the verification keys for the plurality of data writing terminal devices to the data reading terminal device in pairs with terminal IDs of the plurality of data writing terminal devices,

wherein the writing means in the data writing terminal device writes a terminal ID of the data writing terminal device on the IC card together with the digital signature data,

wherein the verification key storing means in the data reading terminal device stores the verification keys for the plurality of data writing terminal devices and the terminal IDs of the plurality of data writing terminal devices in pairs,

wherein the reading means in the data reading terminal device reads the terminal ID from the IC card together with the digital signature data, and

wherein the authenticating means in the data reading terminal device refers to the read terminal ID, retrieves the verification key corresponding to the terminal ID from the verification key storing means, and recovers the plaintext data from the digital signature data using the retrieved verification key.

9.  The card data authentication system of Claim 1,

wherein the management device generates the signature keys which are each different for the plurality of data writing terminal devices and the verification keys which are each different for the plurality of data writing terminal devices,

wherein the management device stores a center signature key and a center verification key which have been generated based on the digital signature scheme with the public-key cryptosystem, generates certificates respectively as digital signatures for the verification keys for the plurality of data writing terminal devices using the center signature key, sends the certificates respectively to the plurality of data writing terminal devices, and sends the center verification key to the data reading terminal device,

wherein the data writing terminal device writes a certificate sent from the management device on the IC card together with the digital signature data, and

wherein the data reading terminal device reads the certificate and the digital signature data from the IC card, verifies an authenticity of the verification key, for which the read certificate has been generated, using the read certificate and the center verification key sent from the management device, and when the verification key is verified as authentic, verifies an authenticity of the plaintext data, for which the read digital signature data has been generated, using the read digital signature data and the verification key.

10. The card data authentication system of Claim 9,

wherein the management device sends the verification keys generated for the plurality of data writing terminal devices respectively to the plurality of data wriLing terminal devices,

wherein the data writing terminal device includes:

signature key storing means being a memory for storing the signature key sent from the management device;

written data storing means being a memory for storing the plaintext data;

verification key storing means being a memory for storing the verification key sent from the management device;

certificate storing means being a memory for storing the certificate which has been generated for the verification key generated for the data writing terminal device and sent from the management device;

digital signature data generating means for generating the digital signature data for the plaintext data using the signature key stored in the signature key storing means; and

writing means for writing, on the IC card, the plaintext data stored in the written data storing means, the digital signature data generated by the digital signature data generating means, the verification key stored in the verification key storing means, and the certificate stored in the certificate storing means, and

wherein the data reading terminal device includes:

center verification key storing means being a memory for storing the center verification key sent from the management device;

reading means for reading the plaintext data, the digital signature data, the verification key and the certificate from the IC card;

verification key verifying means for verifying the authenticity of the verification key using the read verification key, the read certificate, and the center verification key stored in the center verification key storing means; and
authenticating means for verifying, when the verification key is verified as authentic by the verification key verifying means, the authenticity of the plaintext data using the read plaintext data, the read digital signature data, and the verification key.

11. The card data authentication system of Claim 9,

wherein the signature keys and the verification keys are generated by the management device based on a recovery-type signature scheme as the digital signature scheme,
wherein the management device sends the verification keys generated for the plurality of data writing terminal devices respectively to the plurality of data writing terminal devices, wherein the data writing terminal device includes:
signature key storing means being a memory for storing the signature key sent from the management device;
written data storing means being a memory for storing the plaintext data;
verification key storing means being a memory for storing the verification key sent from the management device;
certificate storing means being a memory for storing the certificate that has been generated for the verification key generated for the data writing terminal device and sent from the management device;
digital signature data generating means for generating the digital signature data for the plaintext data based on the recovery-type signature scheme using the signature key stored in the signature key storing means; and
writing means for writing, on the IC card, the digital signature data generated by the digital signature data generating means, the verification key stored in the verification key storing means, and the certificate stored in the certificate storing means, and
wherein the data reading terminal device includes:
center verification key storing means being a memory for storing the center verification key sent from the management device;
reading means for reading the digital signature data, the verification key and the certificate from the IC card;
verification key verifying means for verifying the authenticity of the verification key using the read verification key, the read certificate, and the center verification key stored in the center verification key storing means; and
authenticating means for recovering, when the verification key is verified as authentic by the verification key verifying means, the plaintext data from the read digital signature data using the verification key based on the recovery-type signature scheme, and verifying the authenticity of the plaintext data by judging whether the recovered plaintext data meets a predetermined condition.

12. The card data authentication system of Claim 9,

wherein the center signature key and the center verification key are generated based on a recovery-type signature scheme as the digital signature scheme,
wherein the certificates are generated by the management device respectively for the verification keys based on the recovery-type signature scheme,
wherein the data writing terminal device includes:
signature key storing means being a memory for storing the signature key sent from the management device;
written data storing means being a memory for storing the plaintext data;
certificate storing means being a memory for storing the certificate which has been generated for the verification key generated for the data writing terminal device and sent from the management device;
digital signature data generating means for generating the digital signature data for the plaintext data using the signature key stored in the signature key storing means; and
writing means for writing, on the IC card, the plaintext data stored in the written data storing means, the digital signature data generated by the digital signature data generating means, and the certificate stored in the certificate storing means, and
wherein the data reading terminal device includes:
center verification key storing means being a memory for storing the center verification key sent from the management device;
reading means for reading the plaintext data, the digital signature data and the certificate from the IC card;
verification key verifying means for recovering the verification key from the read certificate based on the recovery-type signature scheme using the center verification key stored in the center verification key storing means, and verifying the authenticity of the verification key by judging whether the recovered verification key meets a predetermined condition; and

authenticating means for verifying, when the verification key is verified as authentic by the verification key verifying means, the authenticity of the plaintext data using the read plaintext data, the read digital signature data and the verification key.

13. The card data authentication system of Claim 9,

wherein the signature keys and the verification keys are generated by the management device based on a recovery-type signature scheme as the digital signature scheme,

wherein the center signature key and the center verification key are generated based on the recovery-type signature scheme,

wherein the certificates are generated by the management device respectively for the verification keys based on the recovery-type signature scheme,

wherein the data writing terminal device includes:

signature key storing means being a memory for storing the signature key sent from the management device;

written data storing means being a memory for storing the plaintext data;

certificate storing means being a memory for storing the certificate which has been generated for the verification key generated for the data writing terminal device and sent from the management device;

digital signature data generating means for generating the digital signature data for the plaintext data based on the recovery-type signature scheme using the signature key stored in the signature key storing mean; and

writing means for writing the digital signature data generated by the digital signature data generating means and the certificate stored in the certificate storing means, on the IC card, and

wherein the data reading terminal device includes:

center verification key storing means being a memory for storing the center verification key sent from the management device;

reading means for reading the digital signature data and the certificate from the IC card;

verification key verifying means for recovering the verification key from the read certificate based on the recovery-type signature scheme using the center verification key in the center verification key storing means, and verifying the authenticity of the verification key by judging whether the recovered verification key meets a predetermined condition; and

authenticating means for recovering, when the verification key is verified as authentic by the verification key verifying means, the plaintext data from the read digital signature data using the verification key based on the recovery-type signature scheme, and verifying the authenticity of the plaintext data by judging whether the recovered plaintext data meets a predetermined condition.

14. A data reading terminal device for reading plaintext data from an IC card on which a data writing terminal device has written the plaintext data and digital signature data that has been generated for the plaintext data using a signature key, and verifying an authenticity of the plaintext data, the data reading terminal device comprising:

verification key storing means being a memory for storing a verification key corresponding to the signature key, the verification key having been generated by an external device based on a digital signature scheme with a public-key cryptosystem;

reading means for reading the plaintext data and the digital signature data from the IC card; and

authenticating means for verifying the authenticity of the plaintext data using the read plaintext data, the read digital signature data and the verification key.

15. A data writing terminal device for writing plaintext data and digital signature data on an IC card so that another data terminal device can verify an authenticity of the plaintext data, the data writing terminal device comprising:

signature key storing means being a memory for storing a signature key that has been generated by an external device based on a digital signature scheme with a public-key cryptosystem;

written data storing means being a memory for storing the plaintext data;

digital signature data generating means for generating the digital signature data for the plaintext data using the signature key; and

writing means for writing the plaintext data stored in the written data storing means and the digital signature data generated by the digital signature data generating means, on the IC card.

## Fig. 1

Fig. 2

MANAGEMENT CENTER — 1010

KEY GENERATING UNIT — 1011
{Ti ‖ Si}
{Ti ‖ Vi}

KEY DISTRIBUTING UNIT — 1012

1000 CARD DATA
AUTHENTICATION
SYSTEM

1200a

DATA TERMINAL

DATA READING UNIT — 1210a

DATA WRITING UNIT — 1220a

SIGNATURE KEY STORING UNIT — 1222
Ti ‖ Si

WRITTEN DATA STORING UNIT — 1221

Ti, Data

AUTHENTICATOR GENERATING UNIT — 1223

Si

Xi

WRITING I/F UNIT — 1224

1200b

DATA TERMINAL

DATA READING UNIT — 1210b

DATA WRITING UNIT — 1220b

VERIFICATION KEY STORING UNIT — 1213
{Ti ‖ Vi}

Ti, Data Xi

Vi

VERIFYING UNIT — 1214

Data

READ DATA STORING UNIT — 1212

READING I/F UNIT — 1211

IC CARD — 1310

SEMICONDUCTOR CHIP

COMMUNICATING UNIT — 1311

DATA MEMORY — 1312

1300

EP 0 936 584 A2

## Fig. 3

**READING I/F UNIT** (1211)

Contains: m { Ti, Data, Xi }

**VERIFYING UNIT** (1214)

① REFER TO TERMINAL ID Ti AND RETRIEVE VERIFICATION KEY Vi CORRESPONDING TO TERMINAL ID Ti FROM VERIFICATION KEY STORING UNIT 1213

↓ Vi

② DERIVE PLAINTEXT Y FROM AUTHENTICATOR Xi USING VERIFICATION KEY Vi ACCORDING TO SIGNATURE ALGORITHM WITH PUBLIC-KEY CRYPTOSYSTEM

↓ Y

③ COMPARE PLAINTEXT Y WITH PLAINTEXT m MADE UP OF TERMINAL ID Ti AND CARD DATA. IF Y AND m MATCH, STORE CARD DATA IN READ DATA STORING UNIT 1212

**VERIFICATION KEY STORING UNIT** (1213)
{Ti ‖ Vi}

← Vi

**READ DATA STORING UNIT** (1212)

Data →

EP 0 936 584 A2

Fig. 4

Fig. 5

READING I/F UNIT 2211

**VERIFICATION KEY VERIFYING UNIT** 2213

① DERIVE VERIFICATION KEY Vi' FROM CERTIFICATE Ci USING CENTER VERIFICATION KEY Vc IN CENTER VERIFICATION KEY STORING UNIT 2212 ACCORDING TO SIGNATURE ALGORITHM WITH PUBLIC-KEY CRYPTOSYSTEM

↓ Vi'

② COMPARE VERIFICATION KEY Vi' WITH VERIFICATION KEY Vi. IF THEY MATCH, PASS VERIFICATION KEY Vi TO VERIFYING UNIT 2214

**CENTER VERIFICATION KEY STORING UNIT** 2212

Vc

Vc

**VERIFYING UNIT** ↓Vi

③ DERIVE PLAINTEXT Y FROM AUTHENTICATOR Xi USING VERIFICATION KEY Vi ACCORDING TO SIGNATURE ALGORITHM WITH PUBLIC-KEY CRYPTOSYSTEM

↓ Y

④ COMPARE PLAINTEXT Y WITH CARD DATA. IF THEY MATCH, STORE CARD DATA IN READ DATA STORING UINT 2215

2214

**READ DATA STORING UNIT** 2215

Data

Ci

Vi

Xi

Data

EP 0 936 584 A2

**Fig. 6**

MANAGEMENT CENTER 3013 Sc 3012 3010

3000 CARD DATA AUTHENTICATION SYSTEM

KEY GENERATING UNIT
{Ti ‖ Si}
{Ti ‖ Vi}
3011
{Ti ‖ Si}

{Ti ‖ Vi} → CERTIFICATE GENERATING UNIT

CENTER KEY STORING UNIT Sc, Vc

{Ti ‖ Ci} → KEY DISTRIBUTING UNIT ← Vc   3014

3200a DATA TERMINAL 3220a

3200b DATA TERMINAL 3210b 3220b

DATA READING UNIT

3210a DATA WRITING UNIT

SIGNATURE KEY STORING UNIT Si

CERTIFICATE STORING UNIT Ci

CENTER VERIFICATION KEY STORING UNIT Vc

DATA WRITING UNIT

3212

Ci VERIFICATION KEY RECOVERING UNIT 3213

DATA READING UNIT

3221 3222 ↓Si

WRITTEN DATA STORING UNIT →Data→ AUTHENTICATOR GENERATING UNIT

3223 3224

↓Xi ↓Ci

3225 → WRITING I/F UNIT

Data, Xi → VERIFYING UNIT →Data→ READ DATA STORING UNIT

↓Vi 3214

READING I/F UNIT 3211 3215

IC CARD 3310

SEMICONDUCTOR CHIP

COMMUNICATING UNIT 3311 3300

DATA MEMORY 3312